# EUROPÄISCHE PATENTANMELDUNG

(11) **EP 3 197 124 A1**
(43) Veröffentlichungstag der Anmeldung: **26.07.2017**
(21) Anmeldenummer: 16000161.6
(22) Anmeldetag: 23.01.2016
(51) Int. Cl.: H04L 29/06, G07F 17/32

(54) **VERFAHREN ZUM ÜBERTRAGEN VON UNTERHALTUNGSSPIELESITZUNGEN ZWISCHEN ENDGERÄTEN**

(71) Anmelder: Greentube Internet Entertainment Solutions GmbH, 1070 Wien (AT)
(72) Erfinder: Grumet, Matthias, A-1020 Wien (AT); Kusternig, Michael, A-1230 Wien (AT); Rollmann, Ralf, A-1040 Wien (AT)
(74) Vertreter: Evans, Gary

(57) **Zusammenfassung**

Die vorliegende Erfindung betrifft ein Verfahren zum Übertragen einer Unterhaltungsspielesitzung zwischen Client-Einheiten (C21, C22) in einem server-basierten Unterhaltungsspielsystem, welche eine Servereinheit (SE) und zumindest zwei Client-Einheiten (C21, C22) umfasst. Dabei werden Verbindungen (KV1, KV2) zwischen der Servereinheit (SE) und den zumindest zwei Client-Einheiten (C21, C22) über ein Kommunikationsnetz (KN) aufgebaut. Für eine aktuelle Unterhaltungsspielesitzung, welche auf einer ersten Client-Einheit (C21) des server-basierten Unterhaltungsspielesystems ausgegeben wird, werden zentral hinterlegte, nutzerspezifische Daten überprüft (1) und dabei eine Kennung (ID1) der ersten Client-Einheit (C21) bei den nutzerspezifischen Daten abgespeichert (2). Wird während der aktuell laufenden Unterhaltungsspielesitzung ein Wechsel auf eine zweite Client-Einheit (C22) des server-basierten Unterhaltungsspielsystems angefordert, so wird die Kennung (ID1) der ersten Client-Einheit (C21) angezeigt (3). Die Kennung (ID2) der ersten Client-Einheit wird auf der zweiten Client-Einheit (C22) eingegeben (4). Von der zweiten Client-Einheit (C22) wird eine Kommunikationsverbindung (KV2) zur Servereinheit (SE) aufgebaut, wobei eine Kennung (ID2) der zweiten Client-Einheit (C22) an die Servereinheit (SE) gesendet und bei den nutzerspezifischen Daten gespeichert wird (5). Nach Aufbau der Kommunikationsverbindung (KV2) zwischen der zweiten Client-Einheit (C22) und der Servereinheit (SE) wird die Unterhaltungsspielesitzung auf der zweiten Client-Einheit (C22) ausgegeben (6) und die Kennung (ID1) der ersten Client-Einheit (C21) aus den nutzerspezifischen Daten gelöscht. Dann wird die Kommunikationsverbindung (KV1) der Servereinheit (SE) zur ersten Client-Einheit (C21) beendet und die erste Client-Einheit (C21) freigegeben (7). Die Unterhaltungsspielesitzung kann dann nahtlos mit dem gleichen Status auf der zweiten Client-Einheit (C22) fortgesetzt werden.

## Beschreibung

### TECHNISCHES GEBIET

Die vorliegende Erfindung betrifft ein Verfahren für eine Übertragung einer Unterhaltungsspielesitzung zwischen verschiedenen Endgeräten bzw. Client-Einheiten in einem server-basierten Unterhaltungsspielsystem. Das server-basierte Unterhaltungsspielsystem umfasst dabei zumindest eine Servereinheit sowie zumindest zwei Endgeräte als Client-Einheiten, wobei Verbindungen zwischen der Servereinheit und den Client-Einheiten bzw. Endgeräten über ein Kommunikationsnetz aufgebaut werden.

### STAND DER TECHNIK

In der Vergangenheit wurden Unterhaltungsspielgeräte, insbesondere in der Form von geldwertmäßig betätigbaren Glückspielautomaten und/oder Wettgeräten, meist als so genannte Stand-alone-Spielgeräte betrieben, auf weiche alle für den Spielbetrieb notwendigen Funktionen und Daten (Spiellogik, Zufallsgenerator, etc.) verfügbar sind. Durch neue Spielideen wie z.B. progressive Jackpots, Multi-Player-Games, etc. wurde begonnen, Unterhaltungsspielgeräte zumindest lokal (z.B. über lokale Netzwerke) zu vernetzen. Weiterhin führten Sicherheits- und Spielerschutzvorschriften sowie der Einsatz von zentralen Systemen wie z.B. Casinomanagement-Systemen, Abrechnungssystemen, Kundendatenverwaltungseinrichtungen, etc., auf welchen beispielsweise Nutzerdaten, Nutzerprofile, Nutzerkonten, Verrechnungsdaten, etc. für einen Spiel betrieb hinterlegt werden können und/oder mit welchen ein Spielbetrieb kontrolliert und überprüft werden kann, zu einer weiteren meist lokalen oder regionalen Vernetzung (z.B. betreiberspezifisch) von Unterhaltungsspielgeräten über ein Kommunikationsnetz.

Durch die Einführung von zentralen Computersystemen im Bereich der Unterhaltungsspielgeräte - hauptsächlich aus Gründen der Kosteneffizienz und der Vereinfachung des Konfigurationsmanagements - sind so genannte server-basierte Unterhaltungsspielsysteme entstanden wie z.B. das in der Schrift WO 00/30729 A1 beschriebene Unterhaltungsspielsystem. Ein server-basiertes Unterhaltungsspielsystem basiert auf dem so genannten Client-Server-Konzept, bei welchem Aufgaben und Dienste innerhalb eines Kommunikationsnetzes auf unterschiedliche Einheiten - d.h. zumindest einen Server bzw. eine Server-Einheit und zumindest einen Client bzw. eine Client-Einheit - verteilt werden. Diese Einheiten (Servereinheit und Client-Einheiten) laufen üblicherweise auf unterschiedlichen - oft örtlich voneinander getrennten, aber über das Kommunikationsnetz (z.B. Local Area Network, Wide Area Network, etc.) miteinander verbindbaren - Geräten (z.B. Rechnereinheiten). Eine stehende Verbindung einer Client-Einheit mit der Servereinheit wird dabei als Sitzung bzw. Session bezeichnet, wobei eine Sitzung mit einer Anmeldung (Log-In) begonnen und mit einer Abmeldung (Log-Out) beendet wird.

Bei einem server-basierten Unterhaltungsspielsystem wird die Servereinheit von einem zentralen Computersystem gebildet, wobei die gesamten Unterhaltungsspielinhalte oder zumindest ein integraler Anteil der Unterhaltungsspielinhalte (z.B. Spiellogik und -grafik, Zufallsgenerator, etc.) auf der Servereinheit zentral abgelegt sind. Auf der zentralen Servereinheit oder einer zugehörigen Datenbankeinheit können weitere Dateninhalte für z.B. Administration der Client-Einheiten, Autorisierung von Client-Einheiten, Authentifizierung von Nutzern und/oder Spielerschutzmaßnahmen (z.B. Spielerkonto, Nutzerprofil, etc.) oder weitere Daten hinterlegt sein. Von den Client-Einheiten können dann üblicherweise nach einer Anmeldung bzw. Autorisierung Verbindungen zur Servereinheit aufgebaut werden, um gewünschte Unterhaltungsspiele wie z.B. zufallsgesteuerte Glücksspiele (z.B. so genannte Slot Games), elektronische Kasinospiele (z.B. Roulette, Poker, Black Jack, etc.), Wettspiele, Lotteriespiele, Sportwetten, etc. abzurufen. Eine derartige Verbindung kann beispielsweise als Unterhaltungsspielesitzung oder Gaming Session bezeichnet werden. Während einer derartigen Gaming Session oder Unterhaltungsspielesitzung können dann z.B. so genannte Slot-Games und/oder Kasinospiele auf der Client-Einheit gespielt, Sportwetten mittels der Client-Einheit platziert oder Wett- oder Lotteriespiele auf der Client-Einheit genutzt werden.

In einem server-basierten Unterhaltungsspielsystem werden als Client-Einheiten üblicherweise Spielterminals oder Gaming-Terminals eingesetzt. Ein Spielterminal ist eine spezielle Form eines Unterhaltungsspielgeräts, welches als Stand-alone-Gerät ausgeführt ist und auf welchem entweder nur ein entsprechendes Betriebssystem oder ein Betriebssystem gemeinsam mit verschiedenen Unterhaltungsspielinhalten (z.B. Spiellogik und -grafik) abgelegt sind. Ablauf und Kontrolle entsprechend den gesetzlichen Vorgaben für die Unterhaltungsspiele, welche auf dem Spielterminal genutzt werden, werden allerdings durch die zentrale Servereinheit durchgeführt. Ein spezielle Form von Spielterminals sind so genannte Video Lottery Terminals oder VLTs, durch welche insbesondere den jeweils zuständigen Behörden eine Überwachung der gespielten Spiele und eine Ausübung einer Kontrollfunktion ermöglicht werden.

Neben den üblichen, meist in Spielstätten, Casinos, etc. örtlich gebunden verfügbaren, Unterhaltungsspielgeräten und/oder Spielterminals wurden vor allem sogenannte interaktive Unterhaltungsspiel-Lösungen (z.B. interaktives Online-Gaming, Online-Casinos, Online-Wetten, Lotteriespiele via Internet, etc.) entwickelt, von welchen Unterhaltungsspiele für einen oder mehrere Spieler zur Verfügung gestellt werden. Aufgrund von Weiterentwicklungen in der Informations- und Kommunikationstechnologie werden die interaktiven Unterhaltungsspiel-Lösungen unter Verwendung moderner Kommunikationsnetze (z.B. Wireless LAN, Mobilfunknetz, digitales Datennetz, etc.) via Internet oder mobilem Internet angeboten und können auf Endgeräten wie z.B. Personal Computers (PC), Laptops, Tablet-PCs oder Smartphones genutzt werden. Die Unterhaltungsspiele (z.B. Glücksspiele, Kasinospiele, Wettspiele, Lotteriespiele, Sportwetten, etc.) können dabei nach Durchlaufen eines Registrierungs- und Anmeldeprozesses bei einer so genannten Online-Gaming-Plattform mit dem jeweiligen Endgerät in einer Unterhaltungsspielesitzung genutzt werden. Üblicherweise basieren diese interaktiven Unterhaltungsspiel-Lösungen ebenfalls auf dem Client-Server-Konzept - beispielsweise mit einer zentralen Online-Gaming-Plattform als Servereinheit und den jeweiligen Endgeräten (z.B. PC, Laptop, Smartphone, etc.) als Client-Einheit.

Durch die Entwicklung von Online-Gaming-Plattformen und/oder server-basierten Unterhaltungsspielsystemen wird mittlerweile die Nutzung von Unterhaltungsspielen wie z.B. Slot-Games, Kasinospielen, Wettspielen, Lotteriespielen, Sportwetten, etc. über verschiedene Kanäle bzw. auf verschiedenen Endgeräten (z.B. Spielterminal, Tablet-PC, Smartphone, web-basiert mittels PC, etc.) zusätzlich zu einem klassischen Unterhaltungsspielgerät und/oder Wettgerät zugelassen. Damit können Nutzern beispielsweise dieselben Unterhaltungsspiele wie auf Unterhaltungsspielgeräten und/oder Spielterminals im Casino webbasiert oder via mobiles Internet ortsungebunden zur Verfügung gestellt werden. Es kann auf einem Spielterminal oder Unterhaltungsspielgerät beispielsweise unter Nutzung einer Kunden- oder Spielerkarte ein bestimmtes Unterhaltungsspiel genutzt werden. Dasselbe Unterhaltungsspiel kann aber auch z.B. nach einem Anmeldeprozess bei einer Online-Gaming-Plattform mit nutzerspezifischen Endgeräten z.B. wie PC, Laptop, Tablet-PC oder Smartphone verwendet werden. Allerdings sind üblicherweise aufgrund unterschiedlicher Vorgaben (z.B. gesetzliche Regelungen, notwendige Nutzerdaten für eine Identifikation, etc.) nutzerspezifische Daten wie beispielsweise eine Kundenkarte, welche am Unterhaltungsspielgerät oder Spielterminal z.B. für eine Anmeldung oder Nutzeridentifikation für eine Unterhaltungsspielesitzung verwendet wird, nicht mit den nutzerspezifischen Daten wie z.B. dem Spieler- oder Nutzerkonto oder Nutzerprofil für die webbasierte oder mobile Online-Nutzung verknüpft. Damit ist es für den Nutzer sehr umständlich, beispielsweise von einem Spiel auf einem Casino-Spielterminal auf eine Online-Variante dieses Spieles auf einem mobilen Endgerät zu wechseln, wenn z.B. das jeweilige Spielterminal im Casino oder das Casino verlassen wird.

Üblicherweise muss zuerst eine Abmeldung (Log-Out) am server-basierten Unterhaltungsspielsystem durchgeführt werden, um die aktuelle Unterhaltungsspielesitzung beispielsweise auf dem Spielterminal als Client-Einheit zu beenden und um dann auf ein mobiles Endgerät als Client-Einheit zu wechseln. Dies weist allerdings den Nachteil auf, dass z.B. auf dem mobilen Endgerät als neue Client-Einheit wieder eine Anmeldung (Log-In) durchgeführt werden muss, um das gewünschte Unterhaltungsspiel und die zugehörige Unterhaltungsspielesitzung zu starten. Dadurch werden der Status und der Verlauf des Unterhaltungsspiels verändert. So wird z.B. die zuletzt am Spielterminal bzw. die auf der alten Client-Einheit angezeigte Walzen-Kombination des Glücksspiels, aktuelle Situation des Kasinospiels, usw. durch die Anmeldung am neuen Endgerät bzw. auf der neuen Client-Einheit verändert. Weiterhin können bereits während des Verlaufs der Unterhaltungsspielesitzung erworbene Vorteile wie z.B. Freispiele, Bonuspunkte, ein aktuelle Stand von Glückspiel-Features, und/oder Guthaben, etc. verloren gehen. Durch die Anmeldung am neuen Endgerät bzw. auf der neuen Client-Einheit wird insbesondere eine neue Unterhaltungsspielesitzung begonnen und im Prinzip das gewünschte Unterhaltungsspiel neu am neuen Endgerät bzw. auf der neuen Client-Einheit gestartet. Ein Nutzer kann daher beispielsweise entweder eine begonnene Unterhaltungsspielesitzung am jeweiligen Endgerät bzw. auf der jeweiligen Client-Einheit des server-basierten Unterhaltungssystems fertig spielen oder es gehen durch einen Wechsel des Endgeräts bzw. der Client-Einheit insbesondere durch eine Unterbrechung der Unterhaltungsspielesitzung aufgrund des Durchlaufens von Abmeldung und Anmeldung z.B. bestimmte in der aktuellen Unterhaltungsspielesitzung erworbenen Vorteile bzw. der aktuelle Status der Unterhaltungsspielesitzung verloren.

Aus der Schrift WO 2014/052259 A1 ist beispielsweise ein Verfahren für eine plattformübergreifend andauernde Unterhaltungsspielesitzung bekannt, wobei ein mobiles Endgerät verwendet wird. Dabei wird das mobile Endgerät mit dem jeweiligen Unterhaltungsspielgerät, auf welchem die aktuelle Unterhaltungsspielesitzung abläuft, in Verbindung gebracht. Die aktuelle Unterhaltungsspielesitzung kann dann vom Unterhaltungsspielgerät auf das mobile Endgerät übertragen werden und auf diesem weitergeführt werden, wenn ein Nahbereich des Unterhaltungsspielgeräts verlassen wird. Dazu wird ein Umlenkmodul eingesetzt, welches zwischen dem Spieleserver und dem Unterhaltungsspielgerät zwischengeschaltet ist und durch welches ein Video-Stream der jeweiligen Unterhaltungsspielesitzung vom Spieleserver auf das mobile Endgerät umgeleitet wird. Soll wieder auf dem Unterhaltungsspielgerät weitergespielt werden, so kann die Umleitung des Video-Streams der Unterhaltungsspielesitzung wieder rückgängig gemacht werden. Das in der Schrift WO 2014/052259 A1 beschriebene Verfahren weist allerdings den Nachteil auf, dass während der Nutzung des mobilen Endgeräts bzw. solange die Unterhaltungsspielesitzung auf das mobile Endgerät umgeleitet wird, das Unterhaltungsspielgerät durch diese Unterhaltungsspielesitzung blockiert wird. Das Unterhaltungsspielgerät kann damit nicht von anderen Spielern oder für andere Unterhaltungsspiele genutzt werden. Außerdem wird bei diesem Verfahren eine zusätzliche Komponente zwischen Server und Unterhaltungsspielgerät bzw. Client eingefügt, wodurch ein zusätzlicher Installations- und Wartungsaufwand entsteht.

### DARSTELLUNG DER ERFINDUNG

Der vorliegenden Erfindung liegt daher die Aufgabe zugrunde, ein Verfahren der eingangs genannten Art anzugeben, durch welches die Nachteile des Standes der Technik vermieden und durch welches ohne zusätzlichem Aufwand in einem server-basierten Unterhaltungsspielsystem Unterhaltungsspielesitzungen mit dem jeweiligen aktuellen Status ohne Unterbrechung zwischen verschiedenen Endgeräten bzw. Client-Einheiten übertragen werden.

Erfindungsgemäß wird die Aufgabe durch ein Verfahren der eingangs genannten Art mit den Merkmalen der unabhängigen Ansprüche gelöst. Vorteilhafte Ausführungsformen der vorliegenden Erfindung sind in den abhängigen Ansprüchen beschrieben.

Erfindungsgemäß erfolgt die Lösung der Aufgabe durch ein Verfahren der eingangs angegebenen Art, bei welchem für eine aktuelle Unterhaltungsspielesitzung, welche auf einer ersten Client-Einheit eines server-basierten Unterhaltungsspielsystems ausgegeben wird, zentral hinterlegte, nutzerspezifische Daten überprüft und dabei eine Kennung der ersten Client-Einheit bei den nutzerspezifischen Daten bzw. zu den nutzerspezifischen Daten gespeichert wird. Wird während der aktuellen Unterhaltungsspielesitzung ein Wechsel auf eine zweite Client-Einheit des server-basierten Unterhaltungsspielsystems angefordert, so wird die Kennung der ersten Client-Einheit z.B. auf einer Anzeigeeinheit der ersten Client-Einheit angezeigt. Diese Kennung der ersten Client-Einheit kann dann auf der zweiten Client-Einheit eingegeben werden. Von der zweiten Client-Einheit wird eine Kommunikationsverbindung zur Servereinheit aufgebaut, wobei eine Kennung der zweiten Client-Einheit an die Servereinheit gesendet und bei den nutzerspezifischen Daten gespeichert wird. Nach Aufbau der Kommunikationsverbindung zwischen der zweiten Client-Einheit und der Servereinheit wird die Kennung der ersten Client-Einheit aus den nutzerspezifischen Daten gelöscht und die aktuelle Unterhaltungsspielesitzung auf der zweiten Client-Einheit ausgegeben. Dann wird die Kommunikationsverbindung der Servereinheit zur ersten Client-Einheit beendet und die erste Client-Einheit freigegeben.

Der Hauptaspekt der erfindungsgemäß vorgeschlagenen Lösung besteht darin, dass eine aktuell laufende Unterhaltungsspielesitzung ohne Unterbrechung und ohne Verlust eines jeweiligen aktuellen Status von einer ersten Client-Einheit bzw. Endgerät auf eine zweite, andere Client-Einheit bzw. ein anderes Endgerät eines server-basierten Unterhaltungsspielsystems übertragen wird. Eine laufende Unterhaltungsspielesitzung kann damit beispielsweise von einer Client-Einheit auf eine andere Client-Einheit übertragen werden, während von einer in der laufenden Unterhaltungsspielesitzung genutzten Unterhaltungsspielanwendung auf z.B. eine Nutzerinteraktion gewartet wird oder während z.B. ein Spielausgang der genutzten Unterhaltungsspielanwendung ermittelt wird. Die aktuelle Unterhaltungsspielesitzung wird während des Umschaltens von der ersten auf die zweite Client-Einheit von der Servereinheit bzw. von z.B. einer speziellen Anwendung auf der Servereinheit aufrechterhalten, während der Nutzer während des gesamten Prozesses aktiv angemeldet bleibt. Die Unterhaltungsspielesitzung wird mit dem jeweils gerade aktuellen Status auf die zweite Client-Einheit übertragen und kann dort vom Nutzer bzw. Spieler nahtlos fortgesetzt werden. Über eine Verknüpfung der nutzerspezifischen Daten mit der Kennung der jeweilig aktuellen Client-Einheit ist der Servereinheit immer die jeweils aktuelle Client-Einheit für die Ausgabe der laufenden Unterhaltungsspielesitzung bekannt. Es ist weder eine neuerliche Anmeldung bzw. eine neuerlicher Anmeldevorgang auf der zweiten Client-Einheit durch den Nutzer notwendig, noch gehen z.B. vom Nutzer während der aktuellen Unterhaltungsspielesitzung erworbene Vorteile (z.B. Bonuspunkte, Spielguthaben, Freispiele, etc.) verloren. Ein weiterer Vorteil der erfindungsgemäß vorgeschlagenen Lösung besteht auch darin, dass nach einer erfolgreichen Übertragung der aktuellen Unterhaltungsspielesitzung auf die zweite Client-Einheit die erste Client-Einheit freigegeben wird. Die Verbindung der ersten Client-Einheit zur Servereinheit wird somit ohne z.B. eine Abmeldung bzw. eines Abmeldevorgang des Nutzers beendet. Die erste Client-Einheit kann damit z.B. von anderen Nutzern für neue Unterhaltungsspielesitzungen genutzt werden. Jede Verbindung zum vorherigen Nutzer wird damit beendet.

Es ist vorteilhaft, wenn während einer Anmeldung bzw. während eines Anmeldevorgangs der ersten Client-Einheit bei der Servereinheit - bevor die jeweils aktuelle Unterhaltungsspielesitzung begonnen wird - die Kennung der ersten Client-Einheit bei den zentral hinterlegten, nutzerspezifischen Daten gespeichert wird. Üblicherweise ist für eine Nutzung von server-basierten Unterhaltungsspielsystem eine meist einmalige Registrierung notwendig, bei welcher je nach den jeweiligen gesetzlichen, administrativen und/oder technischen Vorgaben nutzerspezifische Daten, beispielsweise in Form einer Kundenkarte, eines Nutzerkontos oder Nutzer- bzw. Spielerprofils, im Unterhaltungsspielsystem zentral hinterlegt werden. Diese nutzerspezifischen Daten können vorteilhafter Weise z.B. in einer zentralen Speichereinheit der Servereinheit oder in einer der Servereinheit zugeordneten Datenbank abgespeichert werden. Für die Nutzung bzw. zum Aufbau einer Unterhaltungsspielesitzung muss dann vom Nutzer beispielsweise eine Anmeldung bzw. ein Anmeldevorgang (Log-In) auf derjeweiligen Client-Einheit ausgeführt werden, bei welchem z.B. über eine Nutzerschnittstelle der jeweiligen Client-Einheit nutzerspezifische Anmeldedaten eingegeben und für einen Vergleich mit den jeweiligen hinterlegten, nutzerspezifischen Daten an die Servereinheit weitergeleitet werden. Stimmen die eingegebenen Anmeldedaten und die entsprechenden, nutzerspezifischen Daten überein, so wird eine Verbindung zwischen der Client-Einheit und der Servereinheit aufgebaut und eine Unterhaltungsspielesitzung kann gestartet werden. Bei der Weiterleitung der Anmeldedaten an die Servereinheit kann - idealerweise im Hintergrund bzw. ohne Nutzerinteraktion - die Kennung der gerade genutzten Client-Einheit an die Servereinheit mitgesendet werden. Bei der Überprüfung der Anmeldedaten kann dann die Kennung der Client-Einheit auf einfache Weise bei den nutzerspezifischen Daten - z.B. im Nutzerkonto oder im Nutzerprofil - abgelegt werden.

Dabei ist es günstig, wenn als Kennung der jeweiligen Client-Einheit eine eindeutige, gerätespezifische Kennung verwendet wird. Je nach verwendeter oder genutzter Client-Einheit können dabei beispielsweise eindeutige gerätespezifische Daten wie z.B. eine Seriennummer, Lizenzierungsnummer, Betriebsnummer oder eine eindeutige Hardware-Adresse bei Spielterminals als Client-Einheit oder z.B. eine so genannte Media-Access-Control- oder MAC-Adresse etwa bei mobilen Endgeräte wie Smartphones, Tablet-PCs, Laptops, etc. oder bei Personal Computers als Client-Einheit verwendet werden. Eine MAC-Adresse ist eine Hardware-Adresse, durch welche ein Endgerät in einem Kommunikations- oder Rechnernetzwerk eindeutig identifizierbar ist. Über die Nutzung einer eindeutigen, gerätespezifischen Kennung kann die Client-Einheit im server-basierten Unterhaltungssystem eindeutig identifiziert und damit von der Servereinheit eindeutig erkannt werden. Die Client-Einheit kann damit beim Kommunikationsaufbau und für die Kommunikationsverbindung und die laufenden Unterhaltungsspielesitzung eindeutig angesprochen werden.

Bei einer bevorzugten Ausgestaltung des erfindungsgemäßen Verfahrens wird ein aktuell auf der ersten Client-Einheit angezeigter Status der aktuell laufenden Unterhaltungsspielesitzung bei Anforderung des Wechsels auf die zweite Client-Einheit eingefroren. D.h. die laufende Unterhaltungsspielesitzung wird ab diesem Zeitpunkt bzw. ab einer Eingabe der Kennung der ersten Client-Einheit auf der zweiten Client-Einheit im aktuellen Status fixiert, wobei dieses Fixieren dem Nutzer beispielsweise durch ein Einfrieren einer grafischen Darstellung des aktuell laufenden Unterhaltungsspiels im aktuell angezeigten Status, wie beispielsweise laufende Walzen, drehendes Rouletterad, Darstellung eines Freispiels, Fixieren einer laufenden Entscheidung im Spielverlauf, etc., auf der Anzeigeeinheit der ersten Client-Einheit visualisiert werden kann. Dieses Einfrieren bzw. diese Fixierung kann beispielsweise nach erfolgter Übertragung der Unterhaltungsspielesitzung auf die zweite Client-Einheit oder nach Abbruch der Wechselanforderung gelöst und der Spielverlauf entsprechend nahtlos fortgesetzt werden.

Für den Aufbau der Kommunikationsverbindung zwischen der zweiten Client-Einheit und der Servereinheit kann idealerweise eine Eingabe einer nutzerspezifischen Identifikation auf der zweiten Client-Einheit angefordert werden. Aus Sicherheitsgründen oder aus Gründen des Spielerschutzes kann vom Nutzer beispielsweise die Eingabe einer persönlichen Identifikationsnummer bzw. eines PINs oder biometrischer Daten (z.B. Fingerprint, etc.) gefordert werden. Auf diese Weise kann sehr einfach verhindert werden, dass eine laufende Unterhaltungsspielesitzung von einem nicht-berechtigten Nutzer (z.B. Minderjährige, nicht registrierte oder gesperrte Nutzer, etc.) auf die zweite Client-Einheit übertragen wird oder eine Übertragung auf eine z.B. nicht registrierte bzw. nicht zulässige Client-Einheit erfolgt.

Zweckmäßiger Weise wird vor einem Löschen der Kennung der ersten Client-Einheit aus den nutzerspezifischen Daten und vor Beenden der Kommunikationsverbindung zwischen der ersten Client-Einheit und der Servereinheit eine Bestätigung für den Wechsel auf die zweite Client-Einheit vom Nutzer abgefragt bzw. angefordert. Vom Nutzer kann damit ein Übertragen der aktuell auf der ersten Client-Einheit laufenden Unterhaltungsspielesitzung auf die zweite Client-Einheit mittels Eingabe der Bestätigung fortgesetzt oder auf einfache Weise abgebrochen werden. Die Eingabe der Bestätigung kann beispielsweise über die jeweilige Nutzerschnittstelle der ersten Client-Einheit (z.B. Touchscreen, Tastatur, etc.) erfolgen. Wird keine Bestätigung für den Wechsel der Client-Einheit eingegeben bzw. die Übertragung der Unterhaltungsspielesitzung abgebrochen, so wird die Kennung für die zweite Client-Einheit wieder aus den nutzerspezifischen Daten entfernt. Die Kennung der ersten Client-Einheit bleibt bei den nutzerspezifischen Daten gespeichert und die Unterhaltungsspielesitzung wird auf der ersten Client-Einheit nahtlos und mit dem jeweiligen Status fortgesetzt.

Es ist günstig, wenn die Kennung der jeweiligen Client-Einheit bzw. der ersten Client-Einheit als so genannter QR-Code, als Barcode oder als alphanummerischer Code angezeigt wird. Die Darstellung als QR- bzw. Quick Response-Code oder Barcode ermöglicht dem Nutzer - sofern die zweite Client-Einheit dazu eingerichtet ist - die Kennung auf einfache Weise in die zweite Client-Einheit beispielsweise durch Einscannen oder Einlesen einzugeben. Dabei können z.B. fehlerhafte Eingabe oder ein Vertippen, wie dies beim Eingeben von alphanummerischen Codes vorkommen kann, verhindert werden. Insbesondere QR-Codes stellen eine Methode dar, Informationen so darzustellen bzw. anzuzeigen, dass diese besonders schnell maschinell gefunden und eingelesen werden können. Die Darstellung der Kennung als alphanummerischer Code stellt eine flexible Möglichkeit für die Codeeingabe dar, da ein alphanummerischer Code üblicherweise sehr einfach über eine Nutzerschnittstelle auf der jeweiligen Client-Einheit eingebbar ist. Die Client-Einheit braucht für die Eingabe eines alphanummerischen Codes nicht speziell eingerichtet sein. Sie muss beispielsweise keine Kamera oder keinen Sensor für ein Erfassen des Codes aufweisen.

In einem server-basierten Unterhaltungsspielsystem können zweckmäßigerweise unterschiedliche Endgeräte als Client-Einheiten genutzt werden. Als Client-Einheiten können auf einfache Weise Spielterminals bzw. Gaming-Terminals, Video Lottery Terminals, mobile Endgeräte (z.B. Smartphones, Tablet-PCs, Laptops oder Personal Computer) eingesetzt werden. Die jeweils eingesetzten Client-Einheiten können für eine unterschiedliche Nutzung von Unterhaltungsspielen angeboten werden. So können über Spielterminals insbesondere ortgebunden Unterhaltungsspielesitzungen z.B. in Spielstätten oder Casinos aufgebaut werden, während mobile Endgeräte für eine mobile Nutzung oder Laptops bzw. Personal Computers für eine Online-Nutzung verwendet werden können. Durch das erfindungsgemäße Verfahren kann eine Unterhaltungsspielesitzung ohne Unterbrechung und nahtlos beispielsweise von einem Spielterminal auf ein mobiles Endgerät (z.B. Smartphone) und von diesem auf einen Personal Computer übertragen werden. Ebenso kann vom Nutzer eine Unterhaltungsspielesitzung z.B. auf einem mobilen Endgerät in ein Casino mitgenommen und kann dort auf einem Spielterminal ohne Verlust des jeweils aktuellen Status weitergespielt werden.

Ein Aufbau von Kommunikationsverbindungen zwischen den Client-Einheiten und der Servereinheit sowie von den jeweiligen Sitzungen bzw. Sessions erfolgt über ein Kommunikationsnetz. Als Kommunikationsnetz kann zweckmäßigerweise ein drahtgebundenes und/oder ein drahtloses Kommunikationsnetz oder eine Kombination aus drahtgebundenem und drahtlosem Kommunikationsnetz in Abhängigkeit von der verwendeten Client-Einheit eingesetzt werden. So können beispielsweise für eine Verbindung zwischen Servereinheit und Spielterminals als Client-Einheiten drahtgebundene lokale Netzwerke oder auch z.B. Wireless LAN eingesetzt werden. Für die Kommunikationsverbindung zwischen der Servereinheit und einem mobilen Endgerät kann etwa ein Funknetz (z.B. 3G, LTE, etc.) und das so genannte mobile Internet oder ein Verbindungsaufbau über Wireless LAN verwendet werden. Wird beispielsweise von einem Personal Computer eine Verbindung zur Servereinheit aufgebaut, so können z.B. entsprechende Datennetze und das Internet für die Kommunikation genutzt werden. Entsprechend der jeweiligen Anforderungen an das server-basierte Unterhaltungsspielsystem und den jeweils verwendeten Client-Einheiten sind verschiedenen Varianten und Kombinationen von Kommunikationsnetzen für die Verbindung zwischen Servereinheit und Client-Einheit denkbar.

Bei einer bevorzugten Fortbildung der Erfindung werden für die Kommunikationsverbindungen zwischen Servereinheit und den jeweiligen Client-Einheiten so genannte Windows-Systemdienste verwendet. Windows-Systemdienste sind spezielle Programme bzw. Dienste, welche im Hintergrund ablaufen und von welchen Funktionalitäten gebündelt werden, um diese Dritten zur Verfügung zu stellen.

### AUSFÜHRUNG DER ERFINDUNG

Die Erfindung wird nachfolgend anhand bevorzugter Ausführungsbeispiele und zugehöriger Figuren näher erläutert. Die Figuren zeigen:
- Figur 1:: in schematischer Weise ein beispielhaftes server-basiertes Unterhaltungsspielsystem
- Figur 2:: schematisch und beispielhaft einen Ablauf des Verfahrens zum Übertragen einer Unterhaltungsspielesitzung zwischen Client-Einheiten in einem beispielhaften server-basierten Unterhaltungsspielsystem

### AUSFÜHRUNG DER ERFINDUNG

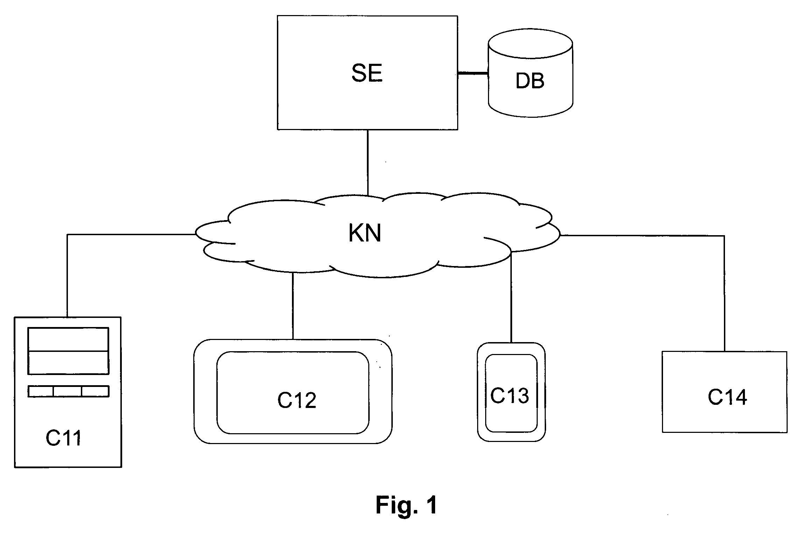

Figur 1 zeigt in schematischer Weise ein beispielhaftes Unterhaltungsspielsystem, welches server-basiert bzw. nach dem Client-Server-Konzept konzipiert ist und welches für eine Spielenutzung durch verschiedene Client-Typen - beispielsweise ortsgebundene Unterhaltungsspielterminals, web-basierten Zugriff oder mittels mobiler Endgeräte als Client-Einheiten eingerichtet ist.

Das beispielhafte Unterhaltungsspielsystem besteht zumindest aus einer Servereinheit SE und mehreren Client-Einheiten C11, C12, C13, C14. Von den Client-Einheiten C11, C12, C13, C14 werden über ein Kommunikationsnetz KN Kommunikationsverbindungen für die jeweiligen Unterhaltungsspielesitzungen und gegebenenfalls andere Sitzungen oder Sessions (z.B. für Administrationszweck, Installationen, Registrierungsprozesse, etc.) aufgebaut. Als Kommunikationsnetz KN kann dabei ein drahtgebundenes, ein drahtloses oder eine Kombination aus drahtgebundenen und drahtlosen Kommunikationsnetz KN - hauptsächlich in Abhängigkeit vom Typ der jeweiligen Client-Einheit C11, C12, C13, C14 eingesetzt werden. Denkbar sind beispielsweise Verbindungen von Client-Einheiten C11, C12, C13, C14 unter zumindest teilweiser Nutzung von öffentlichen Daten- oder Mobilfunknetzen (z.B. 3G, LTE, etc.) bei weiträumigem bzw. regionalem oder so genanntem Remote-Zugriff auf die Servereinheit SE. Für die Kommunikation kann dabei beispielsweise das Internet bzw. seine Dienste bzw. Protokolle (z.B. FTP; HTTP, HTTPS) genutzt werden. Bei ortsgebundener bzw. lokaler Ausdehnung der Verbindungen zwischen Servereinheit SE und den jeweiligen Client-Einheiten C11, C12, C13, C14 (z.B. innerhalb eines Casinos) kann beispielsweise ein so genanntes Lokal Area Network (LAN) wie z.B. typischerweise ein verkabeltes Ethernet und/oder Wireless LAN für eine drahtlose Anbindung eingesetzt werden.

Auf die Servereinheit SE können für den Aufbau von Kommunikationsverbindungen bzw. für Unterhaltungsspielesitzungen von verschiedenen Typen von Client-Einheiten C11, C12, C13, C14 zugegriffen werden. Dazu wird üblicherweise auf der jeweiligen Client-Einheit C11, C12, C13, C14 eine entsprechende Client-Software oder-Anwendung für eine Client-Funktionalität installiert, wodurch die jeweilige Client-Einheit C11, C12, C13, C14 dann im server-basierten Unterhaltungsspielsystem bekannt und nutzbar ist. Als Client-Einheiten C11, C12, C13, C14 können beispielsweise Spiel- oder Gaming-Terminals C11 verwendet werden. Ein Spielterminal C11 kann beispielsweise ortsgebunden in einem Casino eingesetzt sein. Das Spielterminalm C11 ist üblicherweise als Stand-alone-Gerät ausgeführt, wobei auf einem Spielterminal C11 entweder nur ein entsprechendes Betriebssystem oder ein Betriebssystem gemeinsam mit verschiedenen Unterhaltungsspielen (z.B. Spiellogik und -grafik) abgelegt sind. Eine Kontrolle sowie ein Ablauf von auf dem Spiel- oder Gaming-Terminal genutzten Unterhaltungsspielen werden durch die Servereinheit SE durchgeführt. Weiterhin können mobile Endgeräte C12, C13 wie z.B. Smartphones, Tablet-PCs oder Laptops als Client-Einheiten vorgesehen sein, auf welche Unterhaltungsspielesitzungen z.B. via mobilem Internet ortsungebunden durchgeführt werden können. Weiterhin ist es auch möglich, einen Personal Computer als Client-Einheit C14 z.B. für so genanntes interaktives Online-Gaming mittels Internetverbindung zur Servereinheit zu nutzen.

Die Servereinheit SE, zu welcher die Client-Einheiten C11, C12, C13, C14 für Unterhaltungsspielesitzungen eine Verbindung anfordern und aufbauen können, kann beispielsweise mehrere funktionale Einheiten umfassen. Diese funktionalen Einheiten können z.B. auf einer oder mehreren Rechnereinheiten untergebracht sein, wobei der Einfachheit halber diese funktionalen Einheiten in Figur 1 nicht dargestellt sind. Die Servereinheit SE kann beispielsweise einen Web-Server für eine Anbindung an das Internet, einen Server für ein Management von Plattformen und/oder Nutzerkonten, einen Game-Server, einen Content Server, etc. umfassen. Der Game-Server umfasst insbesondere den Zufallsgenerator sowie die so genannte Spielemechanik, durch welchen auf Basis der Spielregeln in Abhängigkeit vom Zufallsgenerator Spielverläufe und -ausgänge bestimmt werden. Vom Content Server können beispielsweise Spielinhalte verwaltet und zur Verfügung gestellt werden.

Weiterhin kann die Servereinheit SE eine Speichereinheit DB umfassen oder es ist der Servereinheit SE eine Datenbank DB zugeordnet, in welche z.B. nutzerspezifische Daten (z.B. Nutzerkonten, Nutzerprofile), Spielinhalte, Administrationsdaten, etc. hinterlegt werden können. Nutzerspezifische Daten (z.B. Nutzerkonten, Nutzerprofile) können beispielsweise vor der ersten Unterhaltungsspielesitzung in einem Registrierungsprozess angelegt und gespeichert werden. Dabei können z.B. gesetzliche Vorgaben bzw. Spielschutzregelungen geprüft werden und als nutzerspezifische Daten beispielsweise personenbezogene Daten (z.B. Name, Alter), Anmeldedaten (z.B. Passwort, PIN, biometrische Daten), Daten für Bezahlfunktionen (z.B. Kreditkartendaten) und weitere notwendige nutzerspezifische Daten zentral in der Speichereinheit bzw. Datenbank DB hinterlegt werden.

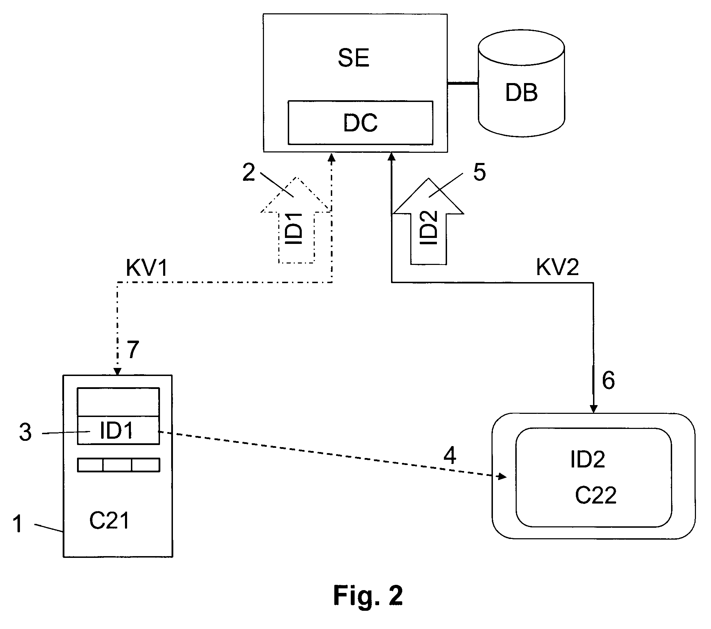

In Figur 2 ist ebenfalls das beispielhafte server-basierte Unterhaltungsspielsystem aus Figur 1 mit einer Servereinheit SE, welcher eine Speichereinheit bzw. Datenbank DB zugeordnet ist, und zwei beispielhaften Client-Einheiten C21, C22 dargestellt. Kommunikationsverbindungen KV1, KV2 zwischen der Servereinheit SE und den Client-Einheiten C21, C22 können wiederum über eine Kommunikationsnetz KN aufgebaut werden. Eine beispielhafte erste Client-Einheit C21 ist beispielsweise ein Spiel- oder Gaming-Terminal, welchem eine erste Kennung ID1 zugeordnet ist. Eine zweite Client-Einheit C22 ist z.B. ein mobiles Endgerät (z.B. ein Smartphone oder ein Tablet-PC), welchem eine zweite Kennung ID2 zugeordnet ist. Als erste bzw. zweite Kennung ID1, ID2 für die jeweilige Client-Einheit C21, C22 werden eindeutige, gerätespezifische Kennungen verwendet werden, durch welche die Client-Einheit C21, C22 in einem Kommunikationsnetz KN bzw. in einem Rechnernetzwerk eindeutig identifizierbar ist. Eine derartige eindeutige, gerätespezifische Kennung ID1, ID2 ist beispielsweise eine so genannte Media-Access-Control- oder MAC-Adresse, welche z.B. bei mobilen Endgeräten oder PCs als Client-Einheit C22 genutzt werden kann. Als Kennung ID1, ID2 können aber auch gerätespezifisch eindeutige Daten wie z.B. Seriennummern, Lizenzierungsnummern, Betriebsnummern oder andere eindeutige Hardware-Kennungen - beispielsweise bei Spielterminals C21 als Client-Einheiten - verwendet werden.

In einem ersten Verfahrensschritt 1 werden für eine aktuelle Unterhaltungsspielesitzung, welche auf der ersten Client-Einheit C21 ablaufen und ausgegeben werden soll, nutzerspezifische Daten (z.B. Anmeldedaten) überprüft. Diese Überprüfung kann beispielsweise bei einem Anmeldevorgangs des Nutzers (Log-In) vor Beginn der aktuellen Unterhaltungsspielesitzung erfolgen. Dazu werden beispielsweise nutzerspezifische Anmeldedaten (z.B. Nutzername, Passwort, PIN, biometrische Daten, auf einer Nutzerkarte gespeicherte personenbezogene Daten) auf der ersten Client-Einheit C21 eingegeben und dann beispielsweise mit nutzerspezifischen Daten aus z.B. einem Nutzerkonto verglichen, welches zentral in der der Servereinheit SE zugeordneten Datenbank DB abgespeichert ist. Bei einer entsprechenden Übereinstimmung der eingegebenen Anmeldedaten mit den gespeicherten, nutzerspezifischen Daten wird eine Kommunikationsverbindung KV1 zwischen der Servereinheit SE und der ersten Client-Einheit C21 aufgebaut. Dann kann die Unterhaltungsspielesitzung gestartet werden. In einem zweiten Verfahrensschritt 2 wird beispielsweise in einem Hintergrundprozess während des Anmeldevorgangs von der ersten Client-Einheit C21 die zugehörige erste Kennung ID1 über eine Kommunikationsverbindung KV1 an die Servereinheit SE weitergeleitet. Die erste Kennung ID1 der ersten Client-Einheit C21 wird dann bei den nutzerspezifischen Daten (d.h. beispielsweise im Nutzerkonto in der der Servereinheit SE zugeordneten Datenbank DB) abgespeichert. Es wird damit eine Verknüpfung zwischen dem Nutzerkonto und der ersten Client-Einheit C21, auf welcher die aktuell angeforderte Unterhaltungsspielesitzung ausgegeben werden soll, hergestellt.

In einem dritten Verfahrensschritt 3 wird ein Wechsel auf die zweite Client-Einheit C22 angefordert. Dies kann beispielsweise durch eine Eingabe auf der zweiten Client-Einheit C22 über eine Nutzerschnittstelle (z.B. Touchscreen, Eingabetaste) zu einem beliebigen Zeitpunkt während der aktuellen Unterhaltungsspielesitzung geschehen. Auf der ersten Client-Einheit C21 (z.B. einer Anzeigeeinheit der ersten Client-Einheit C21) wird die Kennung ID1 der ersten Client-Einheit C21 angezeigt. Die Anzeige der Kennung der ersten Client-Einheit kann beispielsweise als so genannter QR-Code erfolgen. Alternativ oder zusätzlich, ist aber auch eine Anzeige der Kennung ID1 der ersten Client-Einheit C21 beispielsweise als alphanummerischer Code und/oder als Barcode möglich.

In einem vierten Verfahrensschritt 4 wird die Kennung ID1 der ersten Client-Einheit C21 auf der zweiten Client-Einheit C22 eingegeben, auf welche die aktuelle Unterhaltungsspielesitzung übertragen werden soll. Es kann beispielsweise die als QR-Code oder Barcode angezeigte Kennung ID1 der ersten Client-Einheit C21 von der Anzeigeeinheit der ersten Client-Einheit C21 mittels eines optischen Sensors (z.B. Kamera eines Smartphones) eingescannt werden. Die eingescannte Kennung ID1 der ersten Client-Einheit kann dann von zweiten Client-Einheit C22 entsprechend ausgewertet werden. Ist die zweite Client-Einheit C22 beispielsweise für ein Einscannen der ersten Kennung ID1 nicht eingerichtet, so kann beispielsweise die Kennung ID1 der ersten Client-Einheit C21 auch in Form eines alphanummerischen Codes auf der zweiten Client-Einheit C22 eingegeben werden. Weiterhin wird der aktuell auf der ersten Client-Einheit C21 ausgegebene bzw. auf der Anzeigeeinheit der ersten Client-Einheit C21 angezeigte Status der aktuellen Unterhaltungsspielesitzung eingefroren. D.h. der aktuelle Status der Unterhaltungsspielesitzung sowie die aktuelle Unterhaltungsspielesitzung werden von der Servereinheit SE bzw. von einer speziellen Anwendung für den Client-Wechsel DC auf der Servereinheit SE fixiert. Dies kann dem Nutzer beispielsweise durch ein Einfrieren der grafischen Darstellung des aktuellen Status der Unterhaltungsspielesitzung auf der Anzeigeeinheit der ersten Client-Einheit C21 angezeigt werden. Ein aktueller Walzenlauf, ein drehendes Rouletterad, ein aktuell angezeigtes Bonusspiel, etc. eines gerade laufenden Spieles läuft beispielsweise "unendlich" weiter oder wird z.B. optisch eingefroren. Durch das Einfrieren wird ein Verlust des aktuellen Spielestatus der Unterhaltungsspielesitzung (z.B. Freispiele, Bonuspunkte, Guthaben) verhindert.

In einem fünften Verfahrensschritt 5 - nach Eingabe der Kennung ID1 der ersten Client-Einheit C21 auf der zweiten Client-Einheit C22 - wird beispielsweise in einem Hintergrundprozess eine Kennung ID2 der zweiten Client-Einheit C22 an die Servereinheit SE bzw. an die auf der Servereinheit SE befindliche Anwendung für den Client-Wechsel DC weitergeleitet. Von der Servereinheit SE bzw. von der Anwendung für den Client-Wechsel DC wird dann die Kennung ID2 der zweiten Client-Einheit C22 zu den nutzerspezifischen Daten hinzugefügt, welche in der Datenbank DB bzw. auf der Servereinheit SE für die aktuelle Unterhaltungsspielesitzung auf der ersten Client-Einheit C21 verfügbar sind. Dabei wird im fünften Verfahrensschritt 5 von der zweiten Client-Einheit C22 eine Kommunikationsverbindung KV2 zur Servereinheit SE aufgebaut. Optional kann im fünften Verfahrensschritt 5 für den Aufbau der Kommunikationsverbindung KV2 zwischen der Servereinheit SE und der zweiten Client-Einheit C22 eine zusätzliche, nutzerspezifische Identifikation (z.B. ein PIN, biometrische Daten) aus Sicherheitsgründen angefordert werden, welche auf der zweiten Client-Einheit C22 eingegeben wird.

In einem sechsten Verfahrensschritt 6 kann zuerst optional eine Bestätigung für die Übertragung der aktuellen Unterhaltungsspielesitzung von der ersten Client-Einheit C21 (z.B. dem Spielterminal) auf die zweite Client-Einheit C22 (z.B. das mobile Endgerät wie z.B. ein Smartphone) gefordert werden. Diese Bestätigung wird auf der ersten Client-Einheit C21 eingegeben. Wird die Bestätigung nicht eingegeben oder der Übertragungsvorgang beispielsweise abgebrochen, so wird die Kennung ID2 der zweiten Client-Einheit C22 aus den nutzerspezifischen Daten gelöscht, das Einfrieren des aktuellen Status der Unterhaltungsspielesitzung beendet und die Unterhaltungsspielesitzung auf der ersten Client-Einheit ohne Statusänderung bzw. nahtlos fortgesetzt.

Wird im sechsten Verfahrensschritt 6 der Wechsel auf die zweite Client-Einheit C22 bestätigt, so wird die Kennung ID1 der ersten Client-Einheit C21 von der Servereinheit SE bzw. von der Anwendung für den Client-Wechsel DC aus den nutzerspezifischen Daten gelöscht. Über einen Eintrag der Kennung ID2 in den nutzerspezifischen Daten bzw. im Nutzerkonto ist nun nur mehr die zweite Client-Einheit C22 mit dem Nutzerkonto und damit mit der aktuellen Unterhaltungsspielesitzung verknüpft. Die aktuelle Unterhaltungsspielesitzung wird auf die zweite Client-Einheit C22 übertragen und auf dieser ausgegeben. D.h. die Unterhaltungsspielesitzung kann ohne Unterbrechung mit jenem Status fortgesetzt werden, welche bei Anforderung des Wechsels auf die zweite Client-Einheit eingefroren worden ist. In einem siebenten Verfahrensschritt 7 wird die erste Client-Einheit C21 von der Servereinheit SE bzw. von der Anwendung für den Client-Wechsel DC freigegeben und die entsprechende Kommunikationsverbindung KV1 beendet. Die erste Client-Einheit C21 kann nun für eine neue Unterhaltungsspielesitzung von einem anderen Nutzer verwendet werden.

Die aktuelle Unterhaltungsspielesitzung wird auf der zweiten, vom Nutzer gewählten Client-Einheit C22 ausgegeben und kann dort von diesem weitergeführt werden, wobei die bereits auf der ersten Client-Einheit C21 erreichten Vorteile (z.B. Guthaben, Bonuspunkte, Freispiele, Bonusspiele) erhalten geblieben sind. Damit kann ein Nutzer, beispielsweise wie in Figur 2 beschrieben, eine Unterhaltungsspielesitzung auf einem Spielterminal C21 in einem Casino beginnen und bei Verlassen des Casinos seine aktuelle Unterhaltungsspielesitzung auf einer zweiten, mobilen Client-Einheit C22 (z.B. Smartphone, Tablet-PC) weiterspielen bzw. mitnehmen. Es ist auch denkbar, dass die Unterhaltungsspielesitzung von der zweiten, mobilen Client- Einheit C22 auf eine weitere Client-Einheit (z.B. einen PC) übertragen wird. Auch eine Rückübertragung auf die ersten Client-Einheit C21 ist möglich. Weiterhin ist es auch möglich, dass ein Nutzer eine Unterhaltungsspielesitzung beispielsweise auf einem PC oder einem mobilen Endgerät beginnt und diese dann in ein Casino mitnimmt und dort auf eine andere Client-Einheit wie z.B. ein Spielterminal überträgt, um z.B. die optischen Effekte des jeweiligen Spieles auf einer größeren Anzeigeeinheit dargestellt zu bekommen.

## Patentansprüche

1. Verfahren zum Übertragen einer Unterhaltungsspielesitzung zwischen Client-Einheiten (C11, C12, C13, C14, C21, C22) in einem server-basierten Unterhaltungsspielsystems, welches zumindest eine Servereinheit (SE) und zumindest zwei Client-Einheiten (C11, C12, C13, C14, C21, C22) umfasst, wobei zwischen der Servereinheit (SE) und den zumindest zwei Client-Einheiten (C11, C12, C13, C14, C21, C22) über eine Kommunikationsnetz (KN) Kommunikationsverbindungen (KV1, KV2) aufgebaut werden, ***dadurch gekennzeichnet, dass*** für eine aktuelle, auf einer ersten Client-Einheit (C21) ausgegebenen Unterhaltungsspielesitzung zentral hinterlegte, nutzerspezifische Daten überprüft werden (1) und eine Kennung (ID1) der ersten Client-Einheit (C21) bei nutzerspezifischen Daten gespeichert wird (2), dass bei Anforderung eines Wechsels auf eine zweite Client-Einheit (C22) die Kennung (ID1) der ersten Client-Einheit (ID1) angezeigt (3) und auf der zweiten Client-Einheit (C22) eingegeben wird (4), dass eine Kommunikationsverbindung (KV2) von der zweiten Client-Einheit (C22) zur Servereinheit (SE) aufgebaut und eine Kennung (ID2) der zweiten Client-Einheit (C22) bei nutzerspezifischen Daten gespeichert wird (5), dass nach Aufbau der Kommunikationsverbindung (KV2) zwischen der zweiten Client-Einheit (C22) und der Servereinheit (SE) die Kennung (ID1) der ersten Client-Einheit aus den nutzerspezifischen Daten gelöscht und die aktuelle Unterhaltungsspielesitzung auf der zweiten Client-Einheit (C22) ausgegeben wird (6), und dass eine Kommunikationsverbindung (KV1) der ersten Client-Einheit (C21) zur Servereinheit (SE) beendet und die ersten Client-Einheit (C21) freigegeben wird (7).

2. Verfahren nach Anspruch 1, ***dadurch gekennzeichnet, dass*** vor Beginn der Unterhaltungsspielesitzung während eines Anmeldevorgangs der ersten Client-Einheit (C21) bei der Servereinheit (SE) die Kennung (ID1) der ersten Client-Einheit (C21) bei den nutzerspezifischen Daten gespeichert wird (1).

3. Verfahren nach einem der vorangegangenen Ansprüche, ***dadurch gekennzeichnet, dass*** ein aktuell auf der ersten Client-Einheit (C21) ausgegebener Status der Unterhaltungsspielesitzung bei Anforderung des Wechsels auf die zweite Client-Einheit (C22) eingefroren wird (4, 5).

4. Verfahren nach einem der vorangegangenen Ansprüche, ***dadurch gekennzeichnet, dass*** für den Aufbau der Kommunikationsverbindung (KV2) zwischen der zweiten Client-Einheit (C22) und der Servereinheit (SE) eine Eingabe einer nutzerspezifischen Kennung auf der zweiten Client-Einheit (C22) angefordert wird (5).

5. Verfahren nach einem der vorangegangenen Ansprüche, ***dadurch gekennzeichnet, dass*** vor Löschen der Kennung (ID1) der ersten Client-Einheit (C21) und vor Beenden der Kommunikationsverbindung (KV1) zwischen der ersten Client-Einheit (C21) und der Servereinheit (SE) eine Bestätigung für den Wechsel auf die zweite Client-Einheit (C22) abgefragt wird (6).

6. Verfahren nach einem der vorangegangenen Ansprüche, ***dadurch gekennzeichnet, dass*** die nutzerspezifischen Daten, insbesondere als Nutzerkonto oder Nutzerprofil, in einer Speichereinheit (DB) der Servereinheit (SE) oder in einer der Servereinheit (SE) zugeordneten Datenbank (DB) abgespeichert werden (1, 5).

7. Verfahren nach einem der vorangegangenen Ansprüche, ***dadurch gekennzeichnet, dass*** als Kennung (ID1, ID2) der jeweiligen Client-Einheit (C11, C12, C13, C14, C21, C22) eine eindeutige, gerätespezifische Kennung, insbesondere gerätespezifische Daten und/oder eine so genannte Media-Access-Control- oder MAC-Adresse, verwendet wird.

8. Verfahren nach einem der vorangegangenen Ansprüche, ***dadurch gekennzeichnet, dass*** die jeweilige Kennung (ID1, ID2) der jeweiligen Client-Einheit (C11, C12, C13, C14, C21, C22) als QR-Code, Barcode und/oder alphanummerischer Code angezeigt wird (3).

9. Verfahren nach einem der vorangegangenen Ansprüche, ***dadurch gekennzeichnet, dass*** für die Client-Einheiten (C11, C12, C13, C14, C21, C22) Spielterminals, mobile Endgeräte, Personal Computers und Laptops verwendet werden.

10. Verfahren nach einem der vorangegangenen Ansprüche, ***dadurch gekennzeichnet, dass*** als Kommunikationsnetz (KN) ein drahtgebundenes und/oder drahtloses Kommunikationsnetz eingesetzt wird.

11. Verfahren nach einem der vorangegangenen Ansprüche, ***dadurch gekennzeichnet, dass*** für die Kommunikationsverbindungen (KV1, KV2) zwischen der Servereinheit (SE) und den jeweiligen Client-Einheiten (C11, C12, C13, C14, C21, C22) so genannte Windows-Systemdienste verwendet werden.
